# EUROPEAN PATENT APPLICATION

(11) **EP 4 075 368 A1**
(43) Date of publication of application: **19.10.2022**
(21) Application number: 22168575.3
(22) Date of filing: 14.04.2022
(51) Int. Cl.: G06Q 30/06, G06Q 30/02

(54) **INFORMATION PROCESSING APPARATUS AND INFORMATION PROCESSING SYSTEM**

(30) Priority: 15.04.2021 JP 2021069001
(71) Applicant: TOYOTA JIDOSHA KABUSHIKI KAISHA, Toyota-shi, Aichi-ken, 471-8571 (JP)
(72) Inventor: OKA, Naoya, TOYOTA-SHI, AICHI-KEN, 471-8571 (JP); KITAMURA, Satoshi, Nagoya-shi, Aichi-ken, 450-0002 (JP); SOBUE, Yusuke, Nagoya-shi, Aichi-ken, 450-0002 (JP); NAKADA, Seira, Nagoya-shi, Aichi-ken, 450-0002 (JP); MORI, Mami, Nagoya-shi, Aichi-ken, 450-0002 (JP); MORISHIMA, Masato, Nagoya-shi, Aichi-ken, 450-0002 (JP); NUNOKAWA, Yasuyuki, Nagoya-shi, Aichi-ken, 450-0002 (JP)
(74) Representative: Cabinet Beau de Loménie

(57) **Abstract**

An information processing apparatus (100) includes a processor (101) configured to provide, on-line, a first service associated with movement, and provide, when a user who is using a second service, which is a vehicle rental service, executes the movement using the first service by a rented first vehicle, the user with an incentive on at least the second service.

## Description

### BACKGROUND OF THE INVENTION

### 1. Field of the Invention

The present invention relates to a vehicle rental service.

### 2. Description of Related Art

A contract form is known in which a user rents a vehicle for a certain period of time. Such a contract form is also called a lease contract, a subscription contract, and the like. As an invention on the contract form, for example, Japanese Unexamined Patent Application Publication No. 2015-122107 discloses a system that provides a free car wash service to a user depending on the presence/absence of a lease contract.

### SUMMARY OF THE INVENTION

The present invention provides an information processing apparatus and an information processing system that can grant an incentive to a user who uses a vehicle rental service.

An information processing apparatus according to a first aspect of the present invention includes a processor. The processor is configured to provide, on-line, a first service associated with movement, and provide, when a user who is using a second service, which is a vehicle rental service, executes the movement using the first service by a first vehicle that is rented, the user with at least an incentive for the second service.

In the first aspect, the first service may be a platform service that provides information associated with the movement or works as an agent for a procedure associated with the movement.

In the first aspect, an operator of the first service may be an operator who is the same as or associated with an operator of the second service.

In the first aspect, the second service may be a service that allows the user to use the first vehicle by receiving a payment of a fee from the user at every predetermined period, and the incentive may be a reduction in the fee.

In the first aspect, the second service may be a service in which mileage of the first vehicle has an upper limit in a predetermined period, and the incentive may be an extension of the upper limit.

In the first aspect, the incentive may be the extension of the upper limit based on a distance that is moved using the first service.

In the first aspect, the first service may include a service that receives a reservation for at least one spot at which the user stops by during the movement.

In the first aspect, the incentive may include a free or discounted service received at the spot.

In the first aspect, the information processing apparatus may further include a storage unit configured to store the content of a plurality of incentives in association with a plurality of spots, respectively.

In the first aspect, the processor may propose, to the user, a spot at which the user is allowed to stop by during the movement and to receive a provision of the incentive.

In the first aspect, the incentive may include a right to receive maintenance of the first vehicle at a predetermined spot.

In the first aspect, the incentive may include a right to park the first vehicle at a predetermined spot.

In the first aspect, the processor may present, when providing the user with the first service, the content of a providable incentive.

In the first aspect, the processor may further acquire data on a usage status of the second service by the user and determine the content of the providable incentive based on the data.

In the first aspect, the processor may generate data indicating the content of the incentive and transmit the data to an external device.

Further, an information processing system according to a second aspect of the present invention includes a first device configured to provide, on-line, a first service associated with movement, and a second device associated with a second service which is a vehicle rental service. The second device is configured to provide the first device with data on a usage status of the second service by a user, and the first device is configured to, when the user who is using the second service executes the movement using the first service by a first vehicle that is rented, provide the user with at least an incentive for the second service.

In the second aspect, the first service may be a platform service that provides information associated with the movement or works as an agent for a procedure associated with the movement.

In the second aspect, an operator of the first service may be an operator who is the same as or associated with an operator of the second service.

In the second aspect, the first device may present, when providing the user with the first service, the content of a providable incentive.

In the second aspect, the first device may generate data indicating the content of the incentive and transmit the data to an external device.

Another aspect of the present invention is a program causing a computer to execute the method executed by the information processing apparatus, or a non-transitory computer-readable storage medium storing the program.

With each aspect of the present invention, it is possible to grant an incentive to a user who uses a vehicle rental service.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram describing an overview of a reservation system;
FIG. 2 is a diagram describing configurations of a reservation server and a user terminal;
FIG. 3 is an example of contract data stored in a storage unit;
FIG. 4 is a diagram describing an itinerary associated with a user;
FIG. 5 is an example of spot data stored in the storage unit;
FIG. 6 is an example of spot data stored in the storage unit;
FIG. 7A is an example of incentive data stored in the storage unit;
FIG. 7B is another example of the incentive data stored in the storage unit;
FIG. 7C is still another example of the incentive data stored in the storage unit;
FIG. 8 is an example of reservation data generated by the reservation server;
FIG. 9 is a flowchart of processing executed by a control unit in a first embodiment;
FIG. 10 is an example of a screen on which a spot is searched for;
FIG. 11 is an example of a screen on which a plan is searched for;
FIG. 12 is an example of a screen on which a plan is selected;
FIG. 13 is another flowchart of the processing executed by the control unit in the first embodiment;
FIG. 14 is an example of a screen on which a transportation mode is selected;
FIG. 15 is a flowchart of processing executed by the control unit in a modified example of the first embodiment;
FIG. 16 is an example of trip product data according to the modified example of the first embodiment;
FIG. 17 is an example of a screen provided to a user in the modified example of the first embodiment; and
FIG. 18 is a flowchart of processing executed by the control unit in a second embodiment.

### DETAILED DESCRIPTION OF EMBODIMENTS

An information processing apparatus according to an aspect of the present invention includes a control unit configured to provide, on-line, a first service associated with movement, and, when a user who is using a second service, which is a vehicle rental service, executes the movement using the first service by a first vehicle that is rented, provide the user with at least an incentive for the second service.

A contract form (also called a lease or a subscription) is known in which a user rents a vehicle by regularly paying a fee during a contract term. Further, in order to utilize the rented vehicle, a form in which the same business operator that executes a vehicle rental provides a service on the movement (a first service) is considered. Examples of the first service include a service for generating a trip plan or a service for collectively making reservations for a plurality of spots at which the user stops by during a trip. A trip in the present specification is a concept including not only a movement for an entertainment purpose but also a simple movement.

When a user who is using the second service (receiving a rented vehicle) moves using the first service by the rented vehicle, the information processing apparatus provides the user with an incentive for the second service. Examples of the movement using the first service include movement by a trip plan which is created using the first service, visiting a spot which is reserved using the first service, or movement by a trip product which is purchased using the first service. As such, it is possible to motivate the user to use the vehicle rental service.

The first service may be a platform service that provides information associated with the movement or works as an agent for a procedure associated with the movement. Examples of the first service may include a service for introducing a plurality of spots visited by the user, a service for distributing a coupon and the like that can be used at the spots, and a service for working as an agent for making reservations for the spots.

Further, an operator of the first service may be an operator who is the same as or associated with an operator of the second service. Examples of the associated operator include group companies, companies with capital relationships, parent companies and subsidiaries, and businesses that have signed contracts.

Further, the second service may be a service that allows the user to use the first vehicle by receiving a payment of a fee from the user at every predetermined period, and the incentive may be a reduction in the fee. Further, the second service may be a service in which mileage of the first vehicle in the predetermined period has an upper limit, and the incentive may be an extension of the upper limit. Further, the incentive may be the extension of the upper limit based on a distance that is moved using the first service.

For example, in a service where a vehicle can be used by paying a fixed amount every month, a monthly fee may be discounted. Further, when a restriction on the mileage per month and the like exists, the restriction may be alleviated. For example, when moving using the first service, the mileage does not have to be counted and may be uniformly discounted for the movement.

Further, the incentive may be a free or discounted service received at the spot. Further, the information processing apparatus may further include a storage unit configured to store the content of a plurality of incentives in association with a plurality of spots, respectively. For example, when a target spot is a lodging facility, the content of the incentive may be a discount on a lodging fee or a provision of a free meal, and when the target spot is a restaurant, the content of the incentive may be a discount on a price of a meal, or a provision of free food or drink. These incentives may be stored in association with the plurality of spots, respectively.

Further, a control unit may propose, to the user, a spot at which the user can stop by during the movement and at which the user can receive a provision of the incentive. For example, by preferentially guiding users to a spot at which an incentive can be provided, it is possible to enhance usability.

Further, the incentive may include a right to receive maintenance of the first vehicle at a predetermined spot. Examples of vehicle maintenance can include car washing, tire pressure adjustment, refueling, and vehicle interior cleaning.

Further, the incentive may include a right to park the first vehicle at a predetermined spot. With this form, it is possible to enjoy a trip without worrying about a parking fee.

Further, the control unit may present the content of an incentive that can be provided when the first service is provided to the user. By presenting the content of the incentive in advance, it is possible to decide a spot that is more suitable for the user.

Further, the control unit may further acquire data on a usage status of the second service of the user and determine, based on the data, the content of the incentive that can be provided. Data on a usage status of the rental service may be acquired from, for example, an external device that manages a rental contract of a vehicle. Further, data in which the usage status of the rental service is associated with the content of the incentive that can be provided may be created beforehand and stored in the device.

Alternatively, the control unit may generate data indicating the content of the incentive and may transmit the data to an external device. For example, when the incentive is on a rental contract of the first vehicle, the external device can be a server device that manages the rental contract of the first vehicle. Alternatively, when the incentive is a service provided at a spot, the external device may be a device which, for example, manages the spot.

Hereinafter, specific embodiments of the present invention will be described with reference to drawings. Unless otherwise specified, a hardware configuration, a module configuration, a functional configuration, and the like, described in each embodiment, are not intended to limit the technical scope of the invention only thereto alone.

### First Embodiment

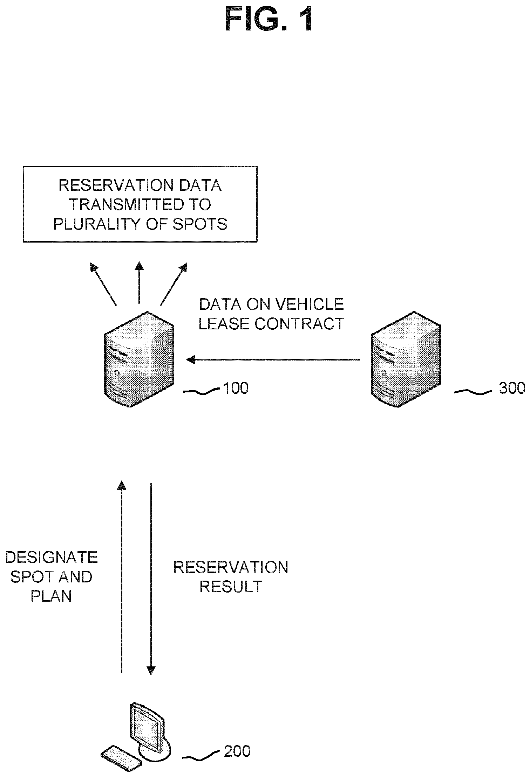

An overview of a reservation system according to a first embodiment will be described with reference to FIG. 1. The reservation system according to the present embodiment includes a reservation server 100 that collectively makes reservations for a plurality of spots (for example, a lodging facility or a restaurant), a user terminal 200, and a contract management server 300 that manages a vehicle lease contract. In the following description, a rental contract of a vehicle is referred to as a lease contract.

The reservation server 100 is a device that generates, based on a request transmitted from the user terminal 200, reservation data for making reservations for a plurality of spots registered in advance. The reservation server 100 manages a plurality of spots or plans provided at these spots, and can make reservations for these spots or plans based on a request from a user. In addition, the reservation server 100 acquires information on the vehicle lease contract from the contract management server 300 and provides the user with an incentive based on the information. The reservation service provided by the reservation server 100 is operated by a first business operator.

The user terminal 200 is a computer held by a user who uses the reservation service. The user can access the reservation server 100 via the user terminal 200 and request to make reservations for a plurality of spots. The user may transmit a desired condition (for example, a desired area, an attribute of a desired spot, and a departure time) to the reservation server 100.

The contract management server 300 is a server device that manages a vehicle lease contract that the user has concluded with the first business operator. In the present embodiment, the vehicle lease contract is a contract in which, when the user pays a usage fee every month, the user is registered in a public institution as a user of a vehicle owned by the first business operator. A contract term is determined beforehand and can range, for example, from approximately one month to several years. The contract management server 300 provides the reservation server 100 with information on the vehicle lease contract.

In the present embodiment, a business operator that provides the reservation service and a business operator that provides the vehicle lease service are assumed to be the same business operator, but both may be substantially the same. Examples of such a relationship include group companies, companies with capital relationships, and parent companies and subsidiaries. In the present invention, "the same business operator" also includes such a relationship. The business operator that provides the reservation service and the business operator that provides the vehicle lease service may be business operators that are not associated with each other. The reservation service provided by the reservation server 100 can be used regardless of presence/absence of a vehicle lease contract.

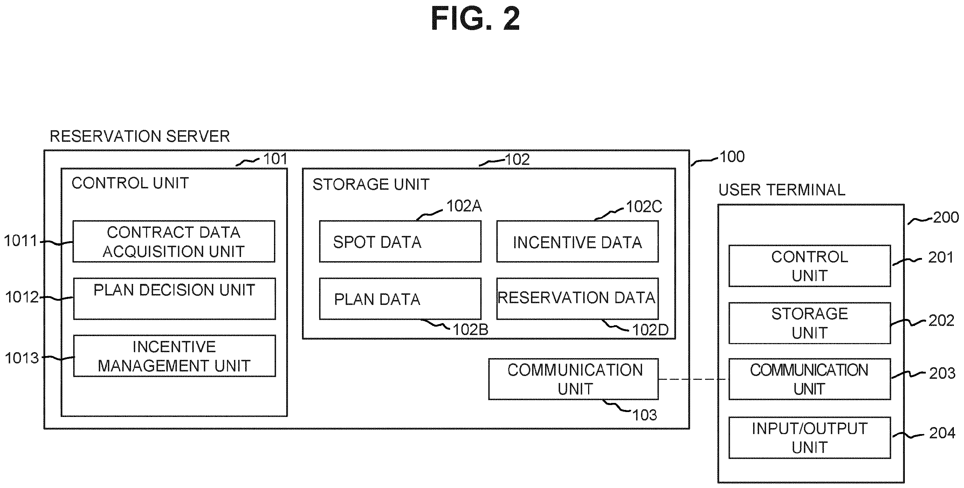

FIG. 2 is a diagram illustrating, in more detail, constituent elements of the reservation server 100 and the user terminal 200 included in the information processing system according to the present embodiment. Here, first, the user terminal 200 will be described. The user terminal 200 is a computer used by an individual, such as a personal computer, a smartphone, a mobile phone, a tablet computer, or a personal information terminal. The user terminal 200 includes a control unit 201, a storage unit 202, a communication unit 203, and an input/output unit 204.

The control unit 201 is an arithmetic device that administers control executed by the user terminal 200. A function of the control unit 201 can be implemented by an arithmetic processing device, such as a central processing unit (CPU). The control unit 201 executes a function of accessing the reservation server 100 and performing an interaction. The function may be implemented by a web browser which is operated on the user terminal 200 or dedicated application software.

The storage unit 202 includes a primary storage device and a secondary storage device. The primary storage device is a memory in which a program executed by the control unit 201 or data used by a control program is developed. The secondary storage device is a memory in which a program executed by the control unit 201 or data used by the control program is stored. The secondary storage device may store a package of a program executed by the control unit 201 as an application. Further, the secondary storage device may also store an operating system used for executing these applications. When the program stored in the secondary storage device is loaded into the primary storage device and executed by the control unit 201, processes described below are executed.

The primary storage device may include a random access memory (RAM) or a read-only memory (ROM). Further, the secondary storage device may include an erasable programmable ROM (EPROM) or a hard disk drive (HDD). Further, the secondary storage device may include a removable medium, that is, a portable recording medium.

The communication unit 203 is a wireless communication interface used for connecting the user terminal 200 to a network. The communication unit 203 is configured to be capable of communicating with the reservation server 100 via, for example, a wireless LAN, or a mobile communication service, such as Third Generation, Long-Term Evolution, or Fifth Generation. The input/output unit 204 is a unit that receives an input operation executed by the user and presents information to the user. In the present embodiment, it is composed of one touch panel display. In other words, it is composed of a liquid crystal display and its controller, and a touch panel and its controller.

Next, the reservation server 100 will be described. The reservation server 100 is a server device that presents the content of the plurality of spots and plans to the user and makes reservations for these spots based on a request transmitted from the user terminal 200.

In the present embodiment, the reservation server 100 may be configured to be capable of executing a Web server used for performing an interaction with the user terminal 200. In this case, for example, when the user terminal 200 accesses the Web server using a browser, the user can make a reservation for a spot. The reservation server 100 may provide the service using a tool other than the Web server. For example, the reservation server 100 may execute a service that interacts with dedicated application software installed on the user terminal 200 by a predetermined protocol.

The reservation server 100 can be composed of a general-purpose computer. In other words, the reservation server 100 can be composed as a computer having a processor, such as a CPU or a GPU, a primary storage device, such as a RAM or a ROM, and a secondary storage device, such as an EPROM, an HDD, or a removable medium. An operating system (OS), various programs, various tables, and the like are stored in the secondary storage device, the programs stored therein are loaded into a work area of the primary storage device and executed, and each function that meets a predetermined purpose, as described below, can be implemented by controlling each component and the like through the execution of the program. However, some or all of the functions may be implemented by a hardware circuit, such as an ASIC or an FPGA.

The control unit 101 is an arithmetic device that administers control executed by the reservation server 100. The control unit 101 can be implemented by an arithmetic processing device, such as a CPU. The control unit 101 includes three functional modules of a contract data acquisition unit 1011, a plan decision unit 1012, and an incentive management unit 1013. Each functional module may be implemented by executing the stored program using the CPU.

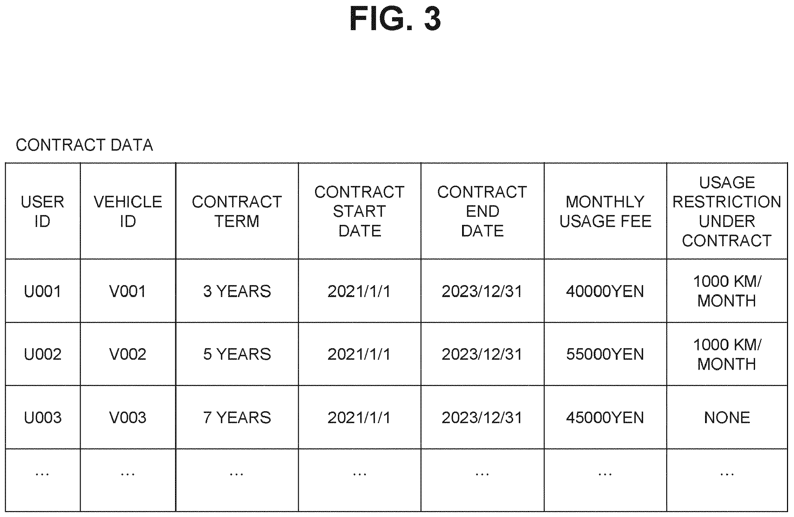

The contract data acquisition unit 1011 acquires, from the contract management server 300, data (hereinafter, referred to as contract data) on a vehicle lease contract that the user has concluded. Specifically, the user who has logged in to the reservation server 100 inquires, to the contract management server 300, whether he/she has concluded a vehicle lease contract with the first business operator, and in response thereto, receives the contract data transmitted from the contract management server 300. FIG. 3 is an example of the contract data. The contract data may include, for example, information on a user ID, a contracted vehicle ID, a contract term, a contract start date and a contract end date, a usage fee, a contract type, a usage condition, or the like.

The plan decision unit 1012 decides a spot and a plan to be used by the user during the trip based on the result of interaction with the user terminal 200, and generates the reservation data. In the present embodiment, the spot is a facility used by the user. Examples of the spot include a lodging facility, a restaurant, an entertainment facility, and the like. Further, the spot may be a facility that provides a service on an automobile, such as a parking lot, a car wash, and a gas station. Further, the spot may be a facility (an experience-based facility) that provides an activity or an experience. Examples of such a facility include a facility at which people can experience specific jobs, such as agriculture, sports, cruising, and scenic flights.

Further, in the present embodiment, the plan identifies a service provided by each of the plurality of spots. When the spot is a lodging facility, examples of the plan include "one night at a single room", "one night at a single room (breakfast included)", and "one night at a double room". Further, when the spot is a restaurant, examples of the plan include "a course meal (lunch)" and "a course meal (dinner)". In addition, the plan may be set in any manner as long as it can identify a service provided at each spot.

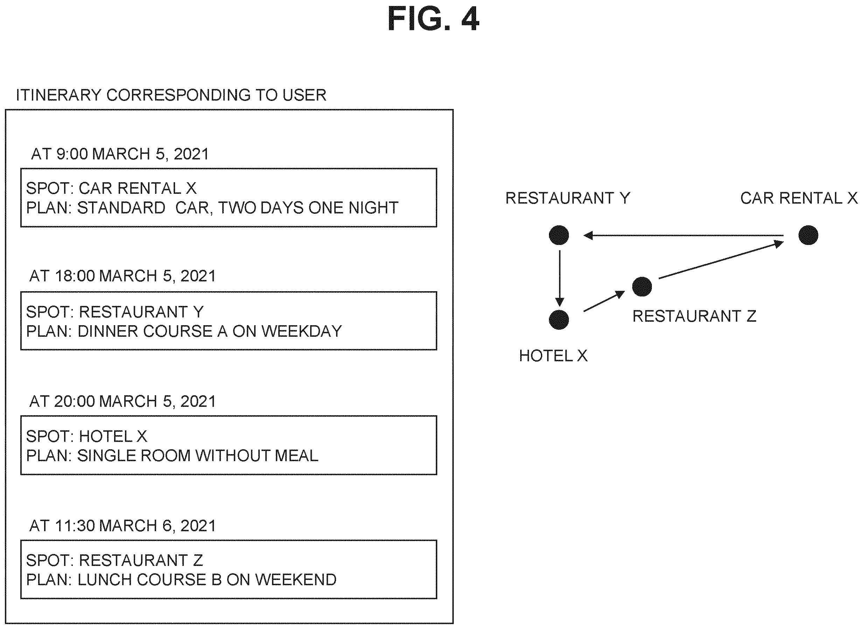

The plan decision unit 1012 decides a combination of a spot to be used by the user during the trip and plans to be used at each spot. The decided plan is associated with a date and time when the spot is used. This information is referred to as an "itinerary". FIG. 4 illustrates an example of the itinerary. The illustrated example shows an itinerary in which the user rents a car, departs, has dinner at a restaurant at a destination, stays one night at a hotel, has lunch at another restaurant the next day, and returns to a departure point. After deciding such an itinerary, the plan decision unit 1012 generates data (the reservation data) for making a reservation for the spot and transmits the data to an external device corresponding to each spot. In the example of FIG. 4, the reservation data is transmitted to four spots, respectively. As such, the user can collectively make reservations for facilities and the like to be used during the trip.

The incentive management unit 1013 manages an incentive granted to the user when using the spot. The reservation service according to the present embodiment is operated by a business operator that provides a vehicle lease service. Therefore, in order to prompt the user to conclude the vehicle lease contract, the reservation server 100 provides an incentive that can be used during the movement to a user who satisfies a predetermined condition. Specifically, when the user who has concluded the vehicle lease contract makes a reservation for a spot using the reservation service and departs for a trip with the contracted vehicle, the incentive management unit 1013 provides a predetermined incentive.

In the first embodiment, the incentive is a free or discounted service associated with each spot. Examples of the incentive include a provision of a free (or discounted) service at a lodging facility, a restaurant, or the like. For example, a room upgrade, or a free provision of goods or services (or a provision at a discounted price) can be used as an incentive. Further, when the spot to be used is a parking lot, a free (or discounted) service for parking or car washing can be used as an incentive.

When the user who satisfies the condition makes a reservation for a spot for which an incentive is set, the incentive management unit 1013 adds, to the reservation data, data indicating an instruction of a provision of an incentive. As such, the user can receive various services at a destination.

The storage unit 102 includes a primary storage device and a secondary storage device. The primary storage device is a memory in which a program executed by the control unit 101 or data used by a control program is developed. The secondary storage device is a device in which a program executed by the control unit 101 or data used by the control program is stored.

Further, the storage unit 102 stores spot data 102A, plan data 102B, incentive data 102C, and reservation data 102D.

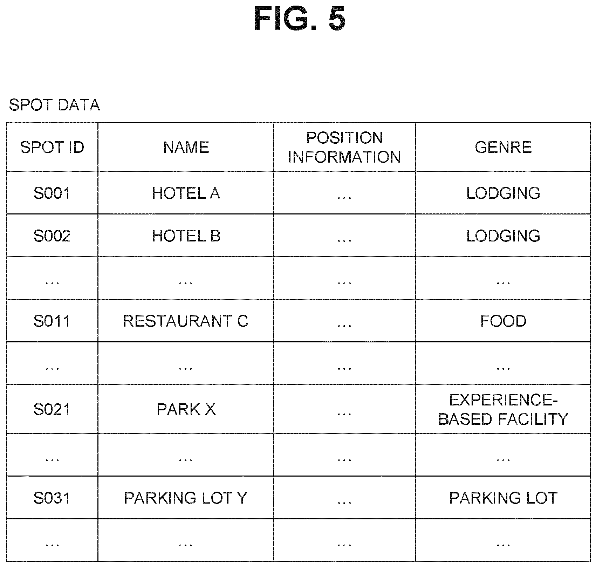

The spot data 102A is data that defines the plurality of spots used by the user. FIG. 5 is an example of the spot data 102A. The spot data 102A includes, for example, a spot ID, a spot name, position information corresponding to the spot, and information on a genre.

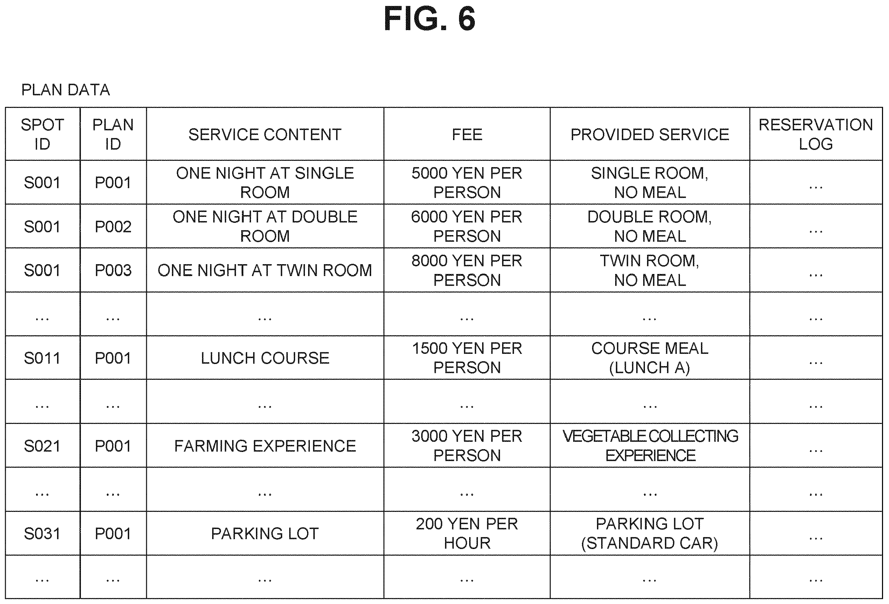

The plan data 102B is data that defines a service (a plan) provided at the plurality of spots, respectively. FIG. 6 is an example of the plan data 102B. The plan data 102B includes, for example, a spot ID, a plan ID, and data on the content or a fee of a service.

When service resources (for example, the number of guest rooms or the number of seats) that can be provided at each spot are limited, it may be necessary to check a vacancy situation before receiving a reservation. In order to handle this, the plan data 102B may include data for determining a possibility of the reservation. As such data, for example, a reference to a reservation log can be exemplified. By accessing the reservation log via the data, the plan decision unit 1012 can present the possibility of the reservation to the user. The reservation log may be included in the reservation server 100, or included in an external device corresponding to each spot.

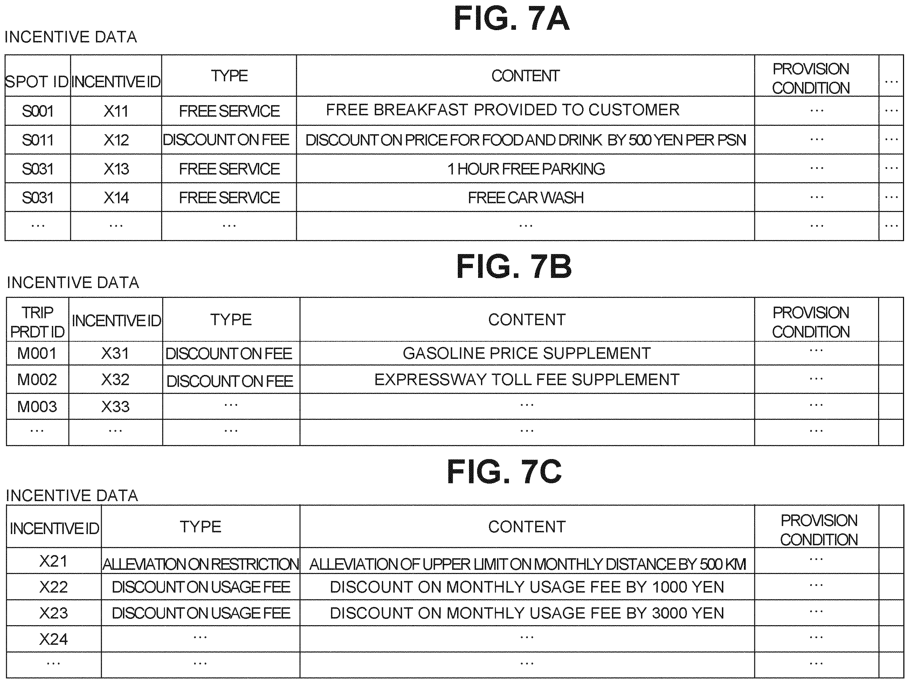

The incentive data 102C is data that defines incentives provided to the user at the plurality of spots. FIG. 7A is an example of the incentive data 102C in the first embodiment. The incentive data 102C includes, for example, a spot ID, an incentive ID, an incentive type, and data on the content of the incentive. Examples of the incentive include a free service and a discounted service. The incentive data 102C may include data on a condition that the user must satisfy in order to receive the provision of the incentive. Examples of such data include a type of vehicle under contract and a contract term of the vehicle. As such, for example, a user with a short-term contract can be excluded from receiving the incentive.

The content of the incentive is set for each spot. For example, when the spot is a lodging facility, a room upgrade, a free (or discounted) meal service, and other additional services (for example, a VOD service, a room service, a welcome drink service) may be provided. Further, for example, when the spot is a restaurant, a free (or discounted) meal service, extended usage hours, and other additional services may be provided.

Further, when the spot is on an automobile, such as a parking lot, a gas station, and a car wash, a service on an automobile may be provided. Examples of such services can include a free (or discounted) parking service and a free (or discounted) service, such as car washing, refueling, and car cleaning.

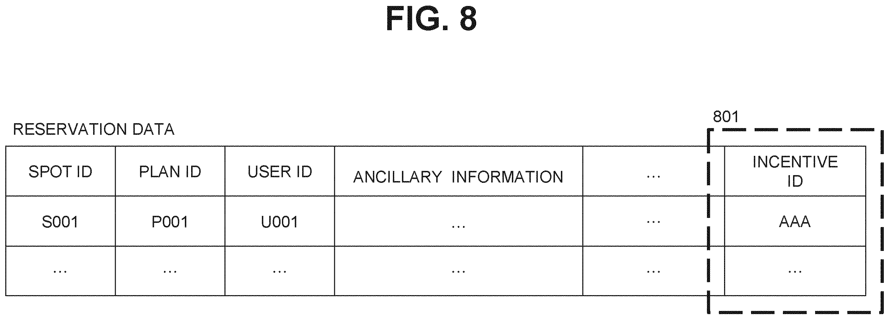

The reservation data 102D is the reservation data generated by the plan decision unit 1012. The generated reservation data is temporarily stored in the storage unit 102 until it is transmitted to an external device. FIG. 8 is an example of the reservation data 102D. The reservation data 102D includes ancillary information in addition to information for identifying a combination of spots, plans, and users. The ancillary information is ancillary information necessary when applying for a reservation for a spot. Examples of the ancillary information include a reservation time (an arrival time, a check-in time), the number of users, age or gender of users, or contact information of users. Further, the reservation data 102D includes information (for example, a reference sign 801) for identifying an incentive to be used by the user. By setting the information, it is possible to instruct the corresponding spot to provide the incentive.

Each piece of data described above may be constructed when a program of a database management system (DBMS) executed by a processor manages the data stored in the storage device. In this case, each piece of data can be, for example, a relational database.

The communication unit 103 is a communication interface used for connecting the reservation server 100 to the network. The communication unit 103 includes, for example, a network interface board or a wireless communication interface used for wireless communication.

The configuration illustrated in FIG. 2 is an example, and all or a part of the illustrated functions may be executed using a circuit designed exclusively. Further, other than those illustrated in the drawing, the program may be stored or executed by a combination of the primary storage device and the secondary storage device.

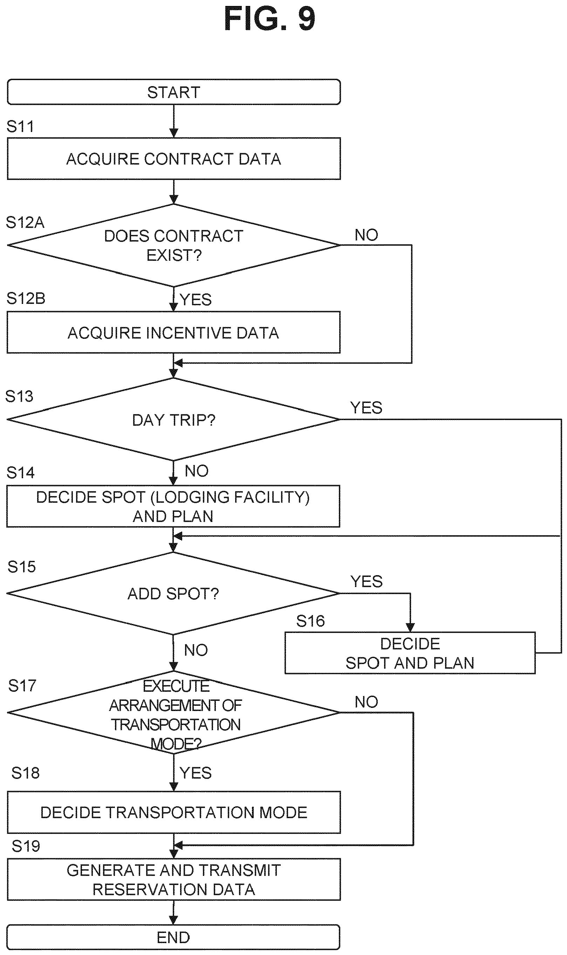

FIG. 9 is a flowchart illustrating processing executed by the reservation server 100. The flowchart illustrated in FIG. 9 is executed at a timing when, for example, the user logs in to the reservation service. At a timing of starting the processing, it is assumed that the reservation server 100 has completed the user identification.

First, in step S11, the contract data acquisition unit 1011 acquires the contract data corresponding to the user from the contract management server 300. In this step, the contract data acquisition unit 1011 requests the contract management server 300 for data on the contract of the user who has logged in to the reservation server 100, and acquires the contract data transmitted in response to the request.

Next, in step S12A, the contract data acquisition unit 1011 determines whether the user has concluded a vehicle lease contract with the first business operator based on the contract data. When a positive determination is made in this step, the process proceeds to step S12B. When a negative determination is made in step S12A, the process proceeds to step S13. In step S12B, the incentive management unit 1013 acquires the incentive data 102C stored in the storage unit 102.

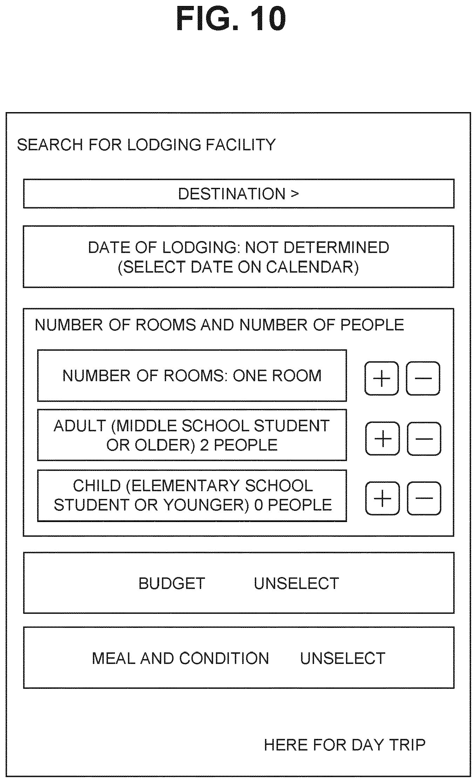

Steps S13 to S18 are steps in which the plan decision unit 1012 creates an itinerary. Steps S13 and S14 are steps in which a lodging facility and a plan to be used are decided. For example, the plan decision unit 1012 provides a lodging search screen, as illustrated in FIG. 10, and allows the user to search for a lodging facility and a plan that can be used. In step S13, upon determining that the itinerary created by the user is a day trip, the plan decision unit 1012 does not select a lodging facility, and the process proceeds to step S15. Whether the itinerary is a day trip can be determined based on an input made by the user.

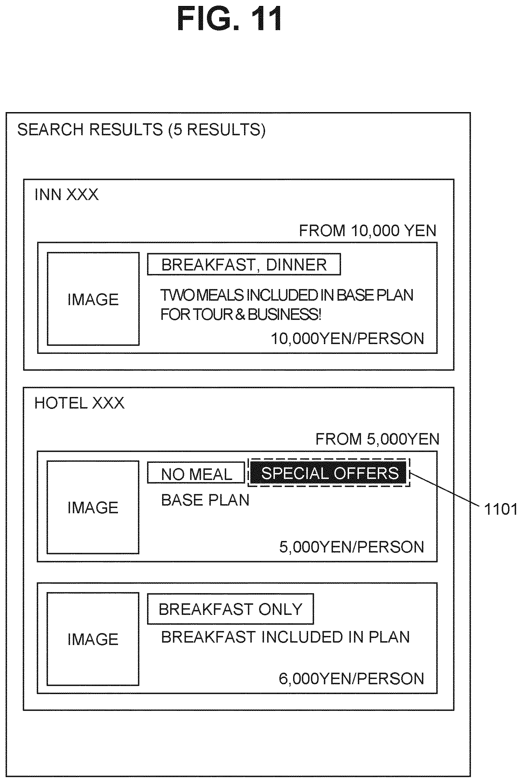

In step S14, the plan decision unit 1012 decides a lodging facility and a plan based on the selection of the user. A lodging facility and a plan can be searched for using an existing technology. For example, according to a search condition that is input via the screen illustrated in FIG. 10, the plan decision unit 1012 may provide a list of plans as illustrated in FIG. 11 and allow the user to select a plan. A plan that can be reserved can be decided with reference to, for example, the plan data 102B and the reservation log.

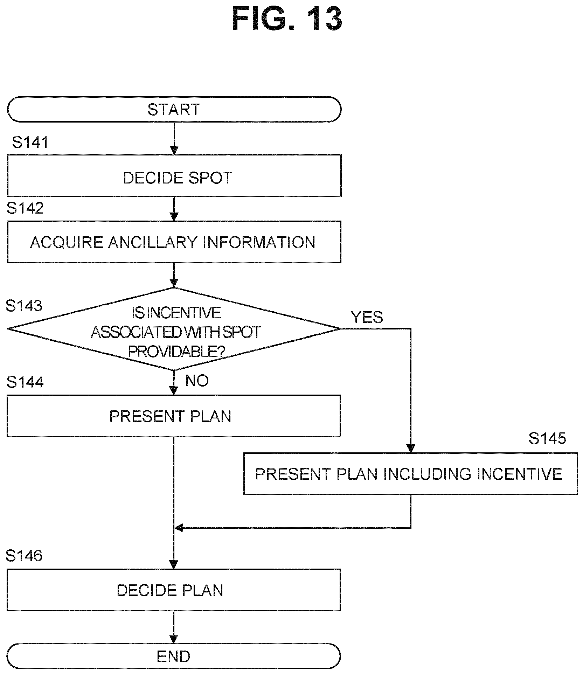

Processing executed by the plan decision unit 1012 in step S14 will be described in more detail with reference to FIG. 13.

First, in step S141, the plan decision unit 1012 decides the spot to be used, that is, the lodging facility. Next, in step S142, the plan decision unit 1012 acquires the ancillary information on usage (ancillary information). When the spot is a lodging facility, as the ancillary information, for example, date and time information (in this example, a check-in date and a check-in time), the number of guests, age, and gender are acquired. In step S143, the plan decision unit 1012 determines whether the incentive associated with the spot can be provided. The determination can be made with reference to the incentive data 102C acquired in step S12B. When no incentives associated with the spot are set or when the user has not concluded a vehicle lease contract, a negative determination is made in this step. When the incentive associated with the spot is set and when the user has concluded a vehicle lease contract, a positive determination is made in this step.

When a negative determination is made in step S143, the plan is presented without any information on the incentive (step S144).

On the other hand, when the incentive is provided at the corresponding spot, the plan decision unit 1012 notifies it to the user. When a positive determination is made in step S143, the plan decision unit 1012 presents the plan after providing the information on the incentive (step S 145). For example, as represented by a reference sign 1101 in FIG. 11, a mark (an icon and the like) may be added to the list. The presence/absence of an incentive may be presented when the user searches for a spot. For example, in step S141, the spot at which the incentive is provided may be preferentially displayed on a list. Further, an icon and the like representing the presence/absence of an incentive may be added to the list of spots.

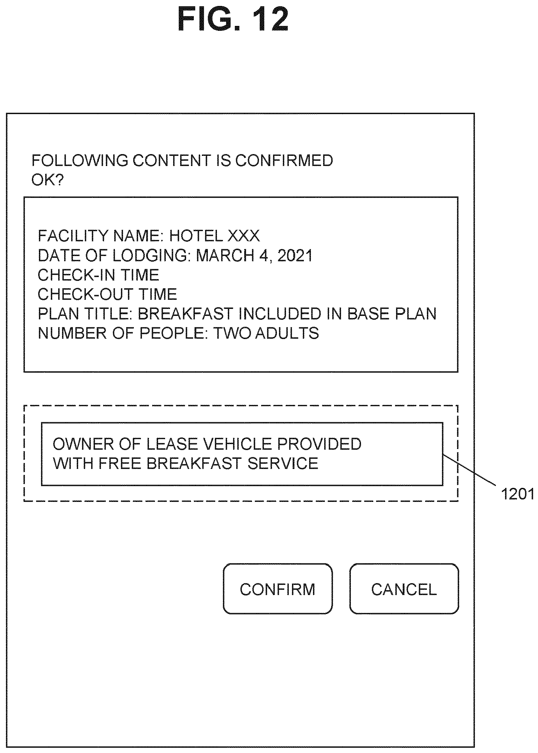

In step S146, the plan decision unit 1012 decides a plan to be used based on the input of the user. For example, when the user selects a plan, the plan is decided through the screen as illustrated in FIG. 12. At this time, as represented by a reference sign 1201, the content of the incentive may be presented. When the user uses the incentive, the content of the incentive is temporarily stored in association with the spot.

Returning to FIG. 9, the description is continued. In step S15, the plan decision unit 1012 determines whether to add a spot other than the lodging facility. In this step, for example, a request for a reservation of a facility other than the lodging facility, such as a restaurant, an entertainment facility, an experience-based facility, and a parking lot, is acquired from the user. When a positive determination is made in this step, the process proceeds to step S16. When a negative determination is made in this step, the process proceeds to step S17.

In step S16, the plan decision unit 1012 decides additional spots and plans using the same process as in step S14. Since the content of the process is the same as that described with reference to FIG. 13, detailed description thereof will be omitted. The ancillary information differs depending on a type of spot. For example, when the spot is a parking lot, information on the vehicle can be the ancillary information. Further, when the spot is an experience-based facility, information on the age and the like of a participant can be the ancillary information.

In a flowchart of FIG. 9, an example of sequentially searching for a lodging facility and other spots is illustrated, but before starting to create an itinerary, the user may be allowed to designate the condition, and a combination of a spot and a plan that meet the designated condition may be automatically extracted and presented. Such a condition includes, for example, an area, which is a place for a trip, a departure point, a date and time of departure, a desired spot to be visited, a genre of a desired spot to be visited, and a date and time of return. As such, it is also possible to automatically generate a recommended itinerary. The generated itinerary may be editable by the user. For example, the user may be allowed to add, delete, and replace a spot, and replace a plan.

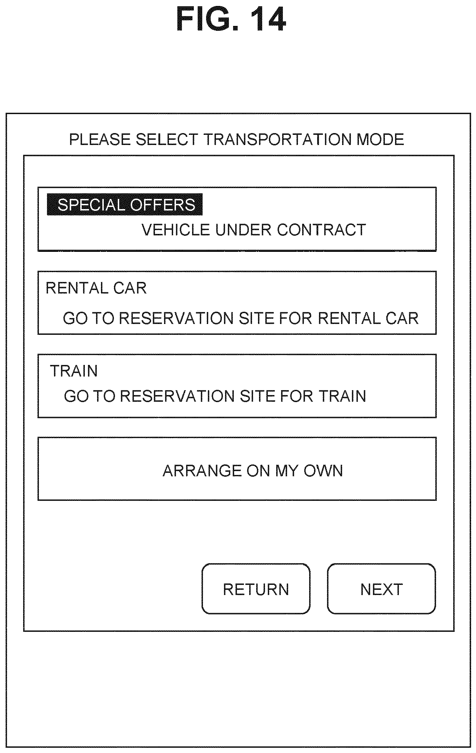

In step S17, the plan decision unit 1012 determines whether to execute an arrangement of a transportation mode. In this step, the necessity of an arrangement of traffic information may be confirmed with the user, and the necessity may be determined based on a reply. Alternatively, the necessity of an arrangement of the traffic information may be determined based on the presence/absence of a vehicle lease contract. For example, when the user has concluded a vehicle lease contract, the vehicle can be used as a transportation mode. Therefore, in such a case, an arrangement of a transportation mode may be determined to be not needed. FIG. 14 is an example of a screen for confirming the necessity of an arrangement of a transportation mode.

Upon executing the arrangement of the transportation mode, in step S18, the plan decision unit 1012 decides a transportation mode to be used. In this step, a departure point, a destination, a route, a transportation mode to be used, and the like are decided. When a transportation mode that needs a reservation is used, in this step, the reservation may be executed by communicating with an external device having jurisdiction over the transportation mode. The arrangement of the transportation mode can also be executed using a service (for example, a reservation service for trains or airplanes) other than the reservation service according to this system.

Two or more transportation modes may be used during the trip. For example, after moving to a target area by train, the user may move by a rental car within the area. In this case, a facility that provides the transportation mode (for example, a rental car office) may be treated as a spot. In this case, the spot and the plan may be decided using the same process as in step S14. As such, it is possible to make a reservation for a rental car and the like.

In step S19, the plan decision unit 1012 generates data (reservation data) for making a reservation for the spot to be used by the user. In this step, reservation data as illustrated in FIG. 8 is generated and transmitted to an external device corresponding to each of the one or more spots to be used by the user. Further, when the user uses the incentive at each spot, data (the reference sign 801) for identifying the content of the incentive is added to the reservation data. The content of the incentive may be presented to the user again before the reservation is confirmed.

As described above, in the reservation system according to the first embodiment, when the user has concluded a vehicle lease contract with the first business operator, various preferential services can be provided during the trip. As such, it is possible to motivate the user to use the vehicle rental service.

### First Modified Example of First Embodiment

In the first embodiment, when an incentive is set for a spot that matches the search condition specified by the user, the user is notified of the fact, but the existence of the spot for which the incentive is set may be actively suggested to the user. For example, when there is a spot at which the user can stop by during the movement and can receive an incentive, the user may be recommended using the spot.

For example, in step S12B, after the incentive management unit 1013 acquires the incentive data, the area to be visited by the user may be compared with the list of spots at which incentives can be provided and a spot that the user can stop by may be proposed to the user. For example, when a user searches for a specific spot in a specific area, another spot that is included in the area and is a spot at which an incentive can be provided may be presented to the user. Further, when there is a spot at which the user is predicted to stop by during the movement, the plan decision unit 1012 may propose the spot. For example, when there is a spot at which an incentive can be provided within a predetermined distance from a trip route of the user, a message recommending stopping by the spot may be output. When a spot is proposed, a list on which an overview of the spot is stated may be output, or a position of the spot may be plotted on a map.

With this modified example, the user can receive more incentives.

### Second Modified Example of First Embodiment

In the first embodiment, an example is described in which the user individually makes reservations for a plurality of spots, such as a lodging facility or a restaurant, but the reservation system may provide a trip product including, as a set, lodging, a meal, multiple activities, or the like.

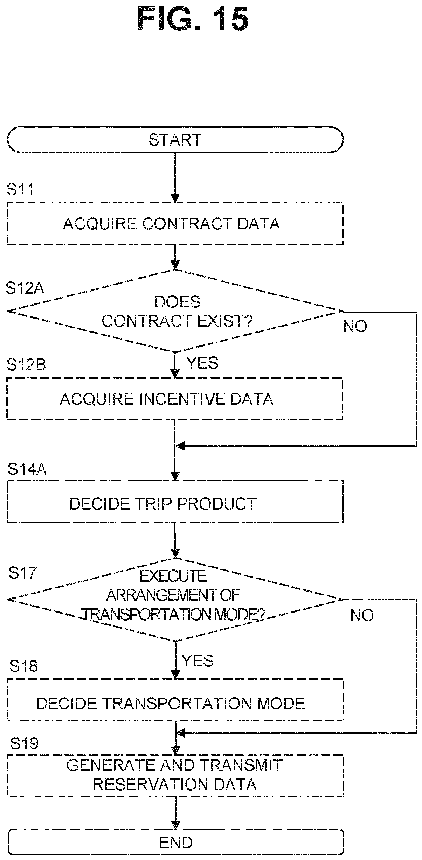

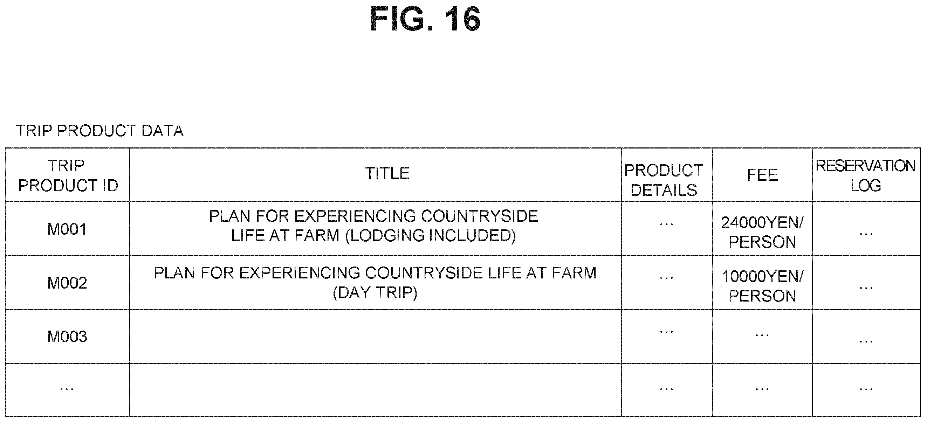

FIG. 15 is a flowchart illustrating processing executed by the reservation server 100 in this modified example. The same processing as that of the first embodiment is represented by dotted lines, and a detailed description thereof will be omitted. In this modified example, in step S14A, the plan decision unit 1012 decides a trip product. The storage unit 102 may store data defining the content of the trip product instead of the spot data 102A and the plan data 102B. FIG. 16 is an example of the data that defines the content of trip products.

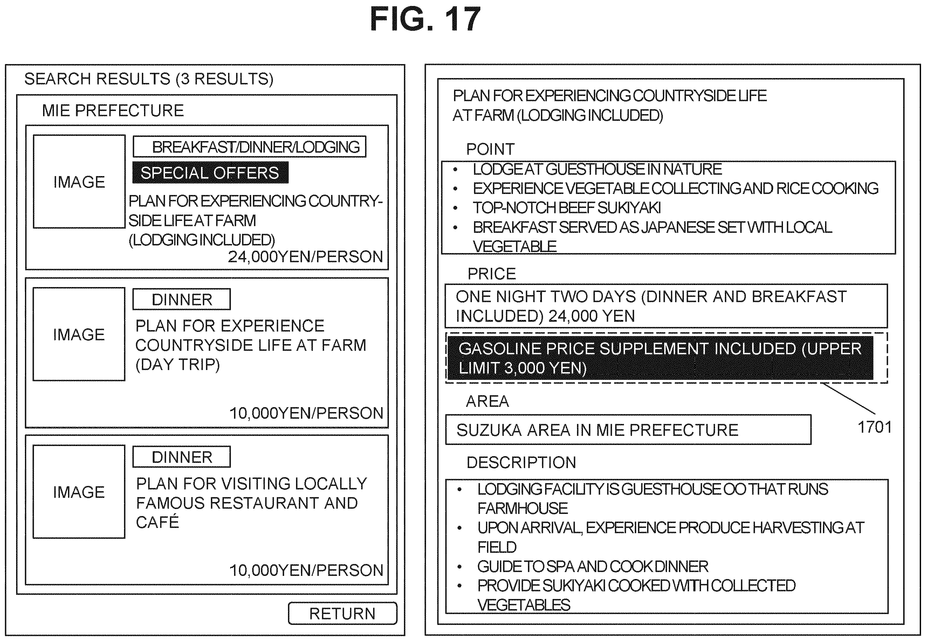

FIG. 17 is an example of a screen provided to the user when a trip product is decided. For example, when the user designates a desired area, the plan decision unit 1012 acquires a plurality of trip products corresponding to the designated area and presents the content to the user. The user can examine the content included in each trip product and decide a product to purchase.

Each of the plurality of trip products is associated with the content of the incentive. FIG. 7B is an example of the incentive data 102C in this modified example. For example, as represented by a reference sign 1701 of FIG. 17, the content of the incentive is presented to the user together with details of the trip product. The processing of step S17 and thereafter is the same as that of the first embodiment.

As such, the reservation system according to the first embodiment can also be applied to a system that provides a packaged product.

### Second Embodiment

In the first embodiment, as incentives, free or discounted services provided at a plurality of spots are exemplified. On the other hand, in a second embodiment, an incentive for a vehicle lease contract is provided to the user.

When concluding a vehicle lease contract, the user needs to pay a monthly usage fee. Further, lease contracts may impose a predetermined restriction on a use of a vehicle. For example, an upper limit may be imposed on monthly mileage. In such a case, when a set mileage is exceeded, an additional charge will be needed. In the second embodiment, when the user takes a trip using the reservation service, as an incentive, a usage fee is reduced or a restriction is alleviated.

The second embodiment differs from the first embodiment in that the incentive data is not associated with the spot but with the vehicle lease contract. FIG. 7C is an example of the incentive data 102C in the second embodiment. In the present embodiment, the incentive data 102C includes, for example, an incentive ID, an incentive type, and data on the content of the incentive. The incentive type includes, for example, alleviation of a restriction and a discount on a usage fee. A discount amount of the usage fee may be a fixed amount or decided based on an amount paid to each spot during the trip (for example, a 10% reduction in a total payment amount).

Further, when a mileage restriction is alleviated, the amount of alleviation may be decided based on the distance moved by the user using the reservation service. For example, when the user makes an itinerary using the reservation service, mileage is calculated for the itinerary, and the amount of alleviation is decided based on the calculated mileage. For example, when the mileage in one trip is estimated to be 500 km, the amount of alleviation may be 500 km, or a distance obtained by multiplying 500 km by a predetermined coefficient.

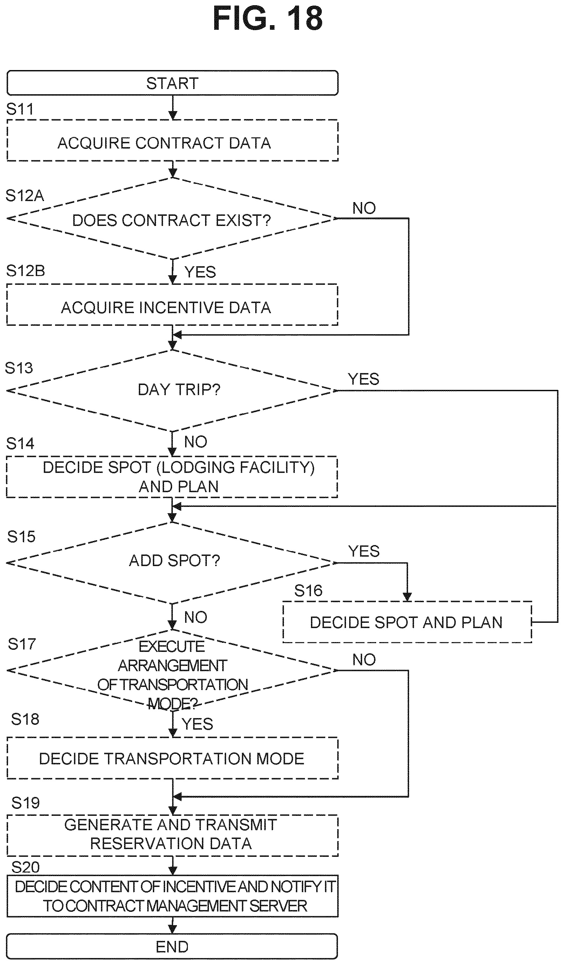

FIG. 18 is a flowchart illustrating processing executed by the reservation server 100 in the second embodiment. In the present embodiment, when deciding the spot and the plan, the reservation server 100 does not execute processing on the incentive. In the same manner, the reservation server 100 does not execute processing for adding the data identifying the content of the incentive to the reserved data. Instead, after the generation of the reservation data, the incentive management unit 1013 decides the content of the incentive to be provided to the user, and notifies the contract management server 300 of the decided content (step S20). The content of the incentive can be decided based on the incentive data 102C exemplified in FIG. 7C. For example, when the content of the contract concluded by the user matches a provision condition defined in the incentive data 102C, the corresponding incentive can be provided. The content of the incentive may be presented to the user before the reservation is confirmed.

With the second embodiment, it is possible to provide the incentive for the vehicle lease contract to the user. When the user takes a trip with a vehicle under contract, a disadvantage, such as an increase in mileage, occurs. However, with the present embodiment, such a disadvantage can be offset, and thus it is possible to prompt the use of the leased vehicle.

In the present embodiment, the alleviation of the mileage restriction and the discount on the monthly usage fee are exemplified, but other incentives may be granted as long as they are on the leased vehicle or the lease contract. For example, when the user concludes a contract under which the leased vehicle can be purchased after a lapse of a predetermined period, an amount needed for the purchase may be discounted.

### Modified Examples

The above embodiments are merely examples, and the present invention may be appropriately modified and implemented without departing from the scope thereof. For example, the processing or the tool described in the present invention can be freely combined and implemented within a range in which no technical contradiction arises.

Further, in the description of the embodiments, as the first service, a service for making reservations for a plurality of spots is exemplified, but the first service may be a service that does not involve a reservation (for example, a service that only provides information). For example, the first service may be a service for searching for a plurality of spots at which coupons are provided. In this case, as an incentive, a dedicated coupon may be provided to the user who has concluded the vehicle lease contract. Further, the first service may be a service that guides the user to a plurality of sites that the user needs to access in order to make an itinerary, and the like. Examples of the plurality of sites can include reservation sites operated by an airline, a railway company, a trip agency, and a lodging facility.

Further, the processing described as being executed by one device may be executed in a shared manner by a plurality of devices. Alternatively, the processing described as being executed by different devices may be executed by one device. In the computer system, the hardware configuration (the server configuration) that implements each function can be flexibly changed.

The present invention can also be implemented by supplying a computer program having the functions described in the above embodiments to a computer, and reading and executing the program by one or more processors included in the computer. Such a computer program may be provided to the computer by a non-transitory computer-readable storage medium that can be connected to the computer system bus, or provided to the computer via the network. Examples of the non-transitory computer-readable storage medium include any kind of disk, such as a magnetic disk (a floppy^{®} disk, a hard disk drive (HDD), and the like), an optical disk (a CD-ROM, a DVD disk, a Blu-ray disk, and the like), a read-only memory (ROM), a random access memory (RAM), an EPROM, an EEPROM, a magnetic card, a flash memory, an optical card, and any kind of medium suitable for storing electronic commands.

## Claims

1. An information processing apparatus (100) comprising:
a processor (101) configured to:
provide, on-line, a first service associated with movement; and
provide, when a user who is using a second service, which is a vehicle rental service, executes the movement using the first service by a first vehicle that is rented, the user with at least an incentive for the second service.

2. The information processing apparatus (100) according to claim 1, wherein the first service is a platform service that provides information associated with the movement or works as an agent for a procedure associated with the movement.

3. The information processing apparatus (100) according to claim 1 or 2, wherein an operator of the first service is an operator who is the same as or associated with an operator of the second service.

4. The information processing apparatus (100) according to any one of claims 1 to 3, wherein the second service is a service that allows the user to use the first vehicle by receiving a payment of a fee from the user at every predetermined period, and the incentive is a reduction in the fee.

5. The information processing apparatus (100) according to any one of claims 1 to 3, wherein the second service is a service in which mileage of the first vehicle has an upper limit in a predetermined period, and the incentive is an extension of the upper limit.

6. The information processing apparatus (100) according to claim 5, wherein the incentive is the extension of the upper limit based on a distance that is moved using the first service.

7. The information processing apparatus (100) according to claim 2, wherein the first service includes a service that receives a reservation for at least one spot at which the user stops by during the movement.

8. The information processing apparatus (100) according to claim 7, wherein the incentive includes a free or discounted service received at the spot.

9. The information processing apparatus (100) according to claim 8, further comprising:
a storage unit (102) configured to store content of a plurality of incentives in association with a plurality of spots, respectively.

10. The information processing apparatus (100) according to claim 8 or 9, wherein the processor (101) is configured to propose, to the user, a spot at which the user is allowed to stop by during the movement and to receive a provision of the incentive.

11. The information processing apparatus (100) according to any one of claims 1 to 10, wherein the incentive includes a right to receive maintenance of the first vehicle at a predetermined spot.

12. The information processing apparatus (100) according to any one of claims 1 to 11, wherein the incentive includes a right to park the first vehicle at a predetermined spot.

13. The information processing apparatus (100) according to any one of claims 1 to 12, wherein the processor (101) is configured to, when providing the user with the first service, present content of a providable incentive.

14. The information processing apparatus (100) according to claim 13, wherein the processor (101) is configured to further acquire data on a usage status of the second service by the user and determine the content of the providable incentive based on the data.

15. The information processing apparatus (100) according to any one of claims 1 to 14, wherein the processor (101) is configured to generate data indicating content of the incentive and transmit the data to an external device.

16. An information processing system comprising:
a first device (100) configured to provide, on-line, a first service associated with movement; and
a second device (300) associated with a second service which is a vehicle rental service, wherein:
the second device (300) is configured to provide the first device (100) with data on a usage status of the second service by a user; and
the first device (100) is configured to, when the user who is using the second service executes the movement using the first service by a first vehicle that is rented, provide the user with at least an incentive for the second service.

17. The information processing system according to claim 16, wherein the first service is a platform service that provides information associated with the movement or works as an agent for a procedure associated with the movement.

18. The information processing system according to claim 16 or 17, wherein an operator of the first service is an operator who is the same as or associated with an operator of the second service.

19. The information processing system according to any one of claims 16 to 18, wherein the first device (100) is configured to, when providing the user with the first service, present content of a providable incentive.

20. The information processing system according to any one of claims 16 to 19, wherein the first device (100) is configured to generate data indicating content of the incentive and transmit the data to an external device.
